# EUROPÄISCHE PATENTSCHRIFT

(11) **EP 2 916 191 B1**
(45) Veröffentlichungstag und Bekanntmachung des Hinweises auf die Patenterteilung: **24.08.2016**
(21) Anmeldenummer: 15154628.0
(22) Anmeldetag: 11.02.2015
(51) Int. Cl.: H05B 1/02, H05B 3/00, G05D 23/19

(54) **Heizungssteuerungs- und/oder -regelungsgerät**
Heating control and/or regulation device
Appareil de régulation et/ou de commande de chauffage

(30) Priorität: 28.02.2014 DE 102014203729
(43) Veröffentlichungstag der Anmeldung: 09.09.2015
(73) Patentinhaber: Siemens Aktiengesellschaft, 80333 München (DE)
(72) Erfinder: Bach, Christine, 90431 Nürnberg (DE); Schmidt, Bernhard, 90425 Nürnberg (DE); Schneider, Reinhard, 96049 Bamberg (DE); Stoll, Jürgen, 90768 Fürth (DE)

(56) Entgegenhaltungen:
- EP-A1- 1 424 530
- WO-A1-96/16364
- JP-A- 2010 271 009
- US-A- 5 816 061

## Beschreibung

Die Erfindung betrifft ein Heizungssteuerungs- und/oder -regelungsgerät gemäß Patentanspruch 1.

Industriell gefertigte Produkte werden oft mit Hilfe von Heizungen thermisch behandelt. Schon geringe Abweichungen im Wärmeprozess können dabei zu einer enormen Beeinträchtigung der Produktqualität führen. Um die Qualität eines wärmebehandelten Produktes zu erhöhen, ist es wichtig, die benötigte Energie zeitlich und räumlich sehr präzise fokussieren zu können. Dies erfolgt mit Hilfe spezieller Heizungssteuerungen und/oder -regelungen, die eine höchst präzise Ansteuerung von Heizelementen gewährleisten. Als Heizelemente kommen dabei häufig ohmsche Verbraucher in Form von Heizstrahlern, insbesondere Infrarotstrahlern, zum Einsatz.

Beispielsweise weisen Blasformanlagen üblicherweise Heizstrahlerfelder zum Erwärmen von Preformen auf. Die Heizstrahler (Infrarotstrahler) werden dann häufig von einem Heizungssteuerungs- und/oder -regelungsgerät über ein in die Spannungsversorgung geschaltetes Schaltelement elektrisch versorgt, hinsichtlich ihrer Leistungsabgabe gesteuert/geregelt und überwacht.

Das Heizungssteuerungs- und/oder -regelungsgerät empfängt hierzu meist über ein Kommunikationssystem wie z.B. einen offenen Feldbus von einer übergeordneten Steuerungs- und/oder Regelungseinrichtung, z.B. einer speicherprogrammierbaren Steuerung (SPS), Sollwerte für die Heizleistung der angeschlossenen Heizelemente. Die Sollwerte können beispielsweise in Form von absoluten Sollwerten, von auf eine maximale Leistung bezogenen Sollwerten oder von auf eine Nennleistung bezogenen Sollwerten vorliegen. Die Leistung kann sich beispielsweise auf eine abzugebende Heizleistung oder eine aufzunehmende elektrische Leistung von Heizelementen beziehen.

Aus diesen Sollwerten werden dann in dem Heizungssteuerungs- und/oder -regelungsgerät mit Hilfe eines vorgegebenen Steuer- und/oder Regelungsalgorithmus Ansteuersignale für die Schaltelemente abgeleitet. Die Sollwerte können aber auch schon in Form von Pulspaketen oder Prozentwerten an Halbwellen pro Zeiteinheit (z.B. pro Sekunde) vorliegen, aus denen dann direkt Ansteuersignale für die Schaltelemente abgeleitet werden können. Über die Ansteuersignale werden dann die Schaltzustände der Schaltelemente und damit die Heizleistungen der Heizelemente gesteuert oder geregelt. Zur Vereinfachung und zur besseren Verständlichkeit werden im Folgenden alle diese Sollwerte als "Sollwerte für eine Heizleistung" bezeichnet.

Die Ansteuerung der Schaltelemente und somit die Steuerung oder Regelung des Schaltzustandes bzw. der Heizleistung kann beispielsweise mit einer Phasenanschnittsteuerung oder einer Halbwellensteuerung mit im Nulldurchgang leistungslos schaltenden Schaltelementen erfolgen. Hierbei kommen als Schaltelemente beispielsweise Halbleiterschalter (z.B. Solid-State Relay) zum Einsatz.

Die eigentliche Steuerung oder Regelung der Temperatur eines zu beheizendes Produktes erfolgt dabei in der übergeordneten Steuerungs- und/oder Regelungseinrichtung, die hierzu einen entsprechenden Steuerungs- und/oder Regelungsalgorithmus aufweist.

Die übergeordnete Steuerungs- und/oder Regelungseinrichtung ist hierzu entweder direkt oder indirekt (über eine Eingangsbaugruppe) mit einer Temperaturmesseinrichtung für Istwerte einer Temperatur verbunden und derart eingerichtet ist, dass sie die Istwerte der Temperatur von dieser Temperaturmesseinrichtung erfasst und mit Hilfe des Steuerungs- und/oder Regelungsalgorithmus Sollwerte für die Heizleistung der Heizelemente erzeugt, die dann über das Kommunikationssystem an das Heizungssteuerungs- und/oder -regelungsgerät übermittelt werden.

In entsprechender Weise kann die übergeordnete Steuerungs- und/oder Regelungseinrichtung entweder direkt oder indirekt (z.B. über analoge oder digitale Eingangsbaugruppen) mit Strom- und/oder Spannungssensoren zur Erfassung von zusätzlichen Strom- und/oder Spannungswerten, mit analogen oder digitalen Signalgebern zur Erfassung von zusätzlichen analogen oder digitalen Signalen und entweder direkt oder indirekt (z.B. über analoge oder digitale Ausgangsbaugruppen) mit Aktoren verbunden sein.

Die Eingangs- und die Ausgangsbaugruppen können dabei als einzelne separate Module oder beide zusammengefasst in einem separaten Modul an dem Heizungssteuerungs- und/oder -regelungsgerät befestigt werden und übermitteln die Messwerte und Signale über das Heizungssteuerungs- und/oder -regelungsgerät und dessen Kommunikationsschnittstelle und über das Kommunikationssystem an die übergeordnete Steuerungs- und/oder Regelungseinrichtung. Alternativ kann es sich bei den Eingangs- und die Ausgangsbaugruppen um von dem Heizungssteuerungs- und/oder -regelungsgerät vollständig getrennte Komponenten mit jeweils eigener Kommunikationsschnittstelle mit dem Kommunikationssystem handeln.

Ausgehend hiervon ist es Aufgabe vorliegender Erfindung, ein Heizungssteuerungs- und/oder -regelungsgerät anzugeben, mit dem es möglich ist, schneller und autonomer auf einen Heizprozess einzuwirken.

Die Lösung dieser Aufgabe gelingt ausgehend von einem Heizungssteuerungs- und/oder -regelungsgerät gemäß Oberbegriff des Patentanspruchs 1 dadurch, dass es
- zumindest einen zusätzlichen Anschluss für eine Temperaturmesseinrichtung für Istwerte einer Temperatur aufweist, und
- dass die Steuer- und/oder Regeleinheit derart eingerichtet ist, dass sie die Istwerte der Temperatur von der Temperaturmesseinrichtung erfasst und den Schaltzustand der Schaltelemente zusätzlich in Abhängigkeit von diesen Istwerten der Temperatur steuert und/oder regelt.

Die Erfassung und Verarbeitung der Istwerte der Temperatur, z.B. der Ist-Temperatur eines zu beheizenden Produktes, sowie deren Berücksichtigung bei der Steuerung und/oder Regelung der Schaltzustände der Schaltelemente erfolgt somit nicht wie im Stand der Technik in der übergeordneten Steuerungs- und/oder Regelungseinrichtung, sondern lokal vor Ort in dem Heizungssteuerungs- und/oder -regelungsgerät. Es ist somit keine Kommunikation der Istwerte der Temperatur von dem Heizungssteuerungs- und/oder -regelungsgerät an die übergeordneten Steuerungs- und/oder Regelungseinrichtung und auch keine anschließende Kommunikation von geänderten Sollwerten für die Heizleistung der Heizelemente von der übergeordneten Steuerungs- und/oder Regelungseinrichtung an das Heizungssteuerungs- und/oder -regelungsgerät notwendig. Hierdurch können damit verbundene Zeitverluste vermieden werden und es kann somit schneller auf einen Heizprozess eingewirkt werden.

Aufgrund der weitgehenden Unabhängigkeit von der übergeordneten Steuerungs- und/oder Regelungseinrichtung, von etwaigen gesonderten Eingangsbaugruppen zur Erfassung der Istwerte der Temperatur und von einem Kommunikationssystem zwischen der übergeordneten Steuerungs- und/oder Regelungseinrichtung und dem Heizungssteuerungs- und/oder -regelungsgerät können die Funktionen des Heizungssteuerungs- und/oder -regelungsgerät auch bei Störungen in der übergeordneten Steuerungs- und/oder Regelungseinrichtung, in Eingangsbaugruppen und/oder in dem Kommunikationssystem aufrechterhalten werden. Es ist somit ein weitgehend autonomer Betrieb des Heizungssteuerungs- und/oder -regelungsgeräts möglich. Hierdurch wird auch die Ausfallsicherheit des Heizprozesses erhöht. Außerdem wird die Komplexität des Gesamtsystems reduziert. Im Vergleich zum Stand der Technik werden auch weniger Komponenten mit entsprechendem Platzbedarf und Verdrahtungsaufwand benötigt.

Die Istwerte der Temperatur können von der Steuer- und/oder Regeleinheit des Heizungssteuerungs- und/oder -regelungsgeräts im Rahmen der Steuerung und/oder Regelung im einfachsten Fall dazu genutzt werden, Sicherheitsreaktionen auszulösen, d.h. zum Beispiel bei Überschreitung eines vorgegebene Grenzwertes eines, eine Gruppe oder alle der Heizelemente von der Spannungsversorgung abzuschalten. Sie können auch von der Steuer- und/oder Regeleinheit genutzt werden, um aus den von einer übergeordneten Steuerungs- und/oder Regelungseinrichtung erhaltenen Sollwerten neue/geänderte Sollwerte abzuleiten. So kann die Steuer- und/oder Regeleinheit beispielsweise erhaltene Sollwerte für eine Heizleistung der Heizelemente (z.B. in Form von Pulspaketen oder Prozentwerten an Halbwellen pro Zeiteinheit) nach vorgegebenen Kriterien in Abhängigkeit von den Istwerten der Temperatur abändern.

Gemäß einer besonders vorteilhaften Ausgestaltung sind die von dem Heizungssteuerungs- und/oder -regelungsgerät über die Schnittstelle empfangenen Sollwerte bereits Temperatursollwerte. In das Heizungssteuerungs- und/oder -regelungsgerät kann dann eine vollständige Temperatursteuerung und/oder - regelung integriert sein. Hierdurch ist eine besonders schnelle Steuerung und/oder Regelung der Istwerte der Temperatur auf die Temperatursollwerte bei gleichzeitig größtmöglicher Autonomie des Heizungssteuerungs- und/oder -regelungsgeräts möglich.

Gemäß einer weiteren vorteilhaften Ausgestaltung weist das Gerät noch zumindest einen zusätzlichen Anschluss für einen Strom und/oder-Spannungssensor auf und die Steuer- und/oder Regeleinheit ist derart ausgebildet, dass sie Strom- und/oder Spannungswerte von diesem Strom- und/oder Spannungssensor erfasst und den Schaltzustand der Schaltelemente zusätzlich in Abhängigkeit von diesen Strom- und/oder Spannungswerten steuert und/oder regelt. Bei den gemessenen Strömen oder Spannungen kann es sich beispielsweise um Ströme durch Heizelemente, Spannungen an Heizelementen, oder Spannungen/Ströme der Spannungsversorgung handeln. Hierdurch können beispielsweise Schwankungen in der Spannungsversorgung oder Änderungen im elektrischen Widerstand der Heizelemente (z.B. in deren Aufwärmphase) bei der Steuerung und/oder Regelung der Schaltzustände der Schaltelemente berücksichtigt werden und somit die Genauigkeit der Steuerung und/oder Regelung erhöht werden. Auch für diese Strom- und/oder Spannungswerte erfolgt die Erfassung und Verarbeitung somit direkt vor Ort in dem Heizungssteuerungs- und/oder -regelungsgerät und ermöglicht somit ein schnelles Einwirken auf den Heizprozess bei hoher Autonomie und Ausfallsicherheit.

Gemäß einer weiteren vorteilhaften Ausgestaltung weist das Heizungssteuerungs- und/oder -regelungsgerät noch zumindest einen zusätzlichen Anschluss für einen analogen oder digitalen Signalgeber auf und die Steuer- und/oder Regeleinheit ist derart eingerichtet, dass sie analoge oder digitale Signale von diesem Signalgeber erfasst und den Schaltzustand der Schaltelemente zusätzlich in Abhängigkeit von diesen Signalen steuert und/oder regelt. Bei den analogen oder digitalen Signalen kann es sich beispielsweise um Signale von Tastern, Schaltern, Not-Aus-Signalgebern, Lichtschranken, Potentiometern, Statussignale, Tachosignale (Pulsgeschwindigkeiten) von Lüftern etc. handeln. Auch für diese Signale erfolgt die Erfassung und Verarbeitung somit direkt vor Ort in dem Heizungssteuerungs- und/oder -regelungsgerät und ermöglicht somit ein schnelles Einwirken auf den Heizprozess und eine hohe Sicherheit einer Anlage.

Bevorzugt weist das Heizungssteuerungs- und/oder -regelungsgerät noch zumindest einen zusätzlichen Anschluss für eine Ausgabe analoger oder digitaler Signale auf. Diese Signale können beispielsweise zur Ansteuerung eines Aktors oder eines Schützes dienen oder können von einem Sicherheitsüberwachungsgerät erfasst und ausgewertet werden. Die Steuer- und/oder Regeleinheit ist derart eingerichtet, dass sie diese analogen oder digitalen Signale in Abhängigkeit von den über zusätzliche Anschlüsse erfassten Werten und/oder analogen oder digitalen Signalen und/oder den Sollwerten erzeugt. Bei dem Aktor kann es sich im einfachsten Fall um ein Meldegerät (z.B. Leuchtmelder, Warntongeber), aber auch um einen Antrieb bzw. eine zugehörige Ansteuereinrichtung für Lüfter, für eine Bewegung von Heizelementen oder für das zu beheizende Produkt handeln. Durch die Ansteuerung eines Aktors oder Sicherheitsüberwachungsgeräts direkt vor Ort durch das Heizungssteuerungs- und/oder -regelungsgerät ist somit ein schnelles Einwirken auf den Heizprozess bei hoher Autonomie und Ausfallsicherheit sowie hoher Personensicherheit möglich.

Bevorzugt weist das Heizungssteuerungs- und/oder -regelungsgerät eine Ablaufsteuerung auf, die die über die zusätzlichen Anschlüsse erfassten Werte und/oder analogen oder digitalen Signale und/oder die Sollwerte miteinander verknüpft und anhand einer hinterlegten Logik dann Reaktionen des Heizungssteuerungs- und/oder -regelungsgeräts auslöst. Diese Reaktionen können Steuer- und/oder Regelungsfunktionen sowie Sicherheitsreaktionen des Heizungssteuerungs- und/oder -regelungsgeräts betreffen. Beispielsweise können durch eine solche Reaktion analoge oder digitale Ausgabesignale erzeugt oder geändert werden, oder es können die Ansteuersignale für die Schaltelemente geändert werden. Die Ablaufsteuerung ist vorzugsweise in Form einer Zustandsmaschine ("State-Machine") realisiert.

Gemäß eine weiteren vorteilhaften Ausgestaltung ist die Schnittstelle zum Anschluss an ein Kommunikationssystem, insbesondere an einen offenen industriellen Feldbus wie z.B. PROFIBUS oder an ein offenes industrielles Netz wie z.B. PROFINET, ausgebildet. Hierdurch kann besonders einfach und aufwandsarm eine Anbindung an eine übergeordnete Steuerungs- und/oder Regelungseinrichtung zum Empfang der Sollwerte realisiert werden.

Gemäß einer weiteren sehr vorteilhaften Ausgestaltung umfasst das Heizungssteuerungs- und/oder -regelungsgerät zumindest ein Grundmodul und ein Peripheriemodul, die über eine Schnittstelle elektrisch und mechanisch miteinander verbindbar sind bzw. voneinander lösbar sind, wobei das Peripheriemodul die zusätzlichen Anschlüsse, vorzugsweise auch zugehörige Einrichtungen zur Erfassung und Vorverarbeitung von Messwerten, umfasst. Über das Peripheriemodul kann eine einfache individuelle Anpassung des Heizungssteuerungs- und/oder -regelungsgeräts an unterschiedliche Applikationen mit unterschiedlichen Eingangsgrößen erfolgen, wohingegen das Grundmodul für alle Applikationen gleich ist. Es können hierzu eine Anzahl unterschiedlicher standardisierter Peripheriemodule für verschiedene Applikationen zur Verfügung gestellt werden, die sich beispielsweise in der Anzahl und Art der Eingänge, Empfindlichkeit der Eingänge, Signalpegel und -formen an den Ausgängen, Spannungsfestigkeit, Kurzschlussfestigkeit, etc. unterscheiden.

Es ist auch möglich, dass das Heizungssteuerungs- und/oder - regelungsgerät einen ersten Betriebsmodus für einen Betrieb des Grundmoduls mit einem Peripheriemodul und einen zweiten Betriebsmodus für einen Betrieb des Grundmoduls ohne ein Peripheriemodul aufweist. Im ersten Betriebsmodus arbeitet das Heizungssteuerungs- und/oder -regelungsgerät dann im schnellen lokalen Steuerungs- und oder Regelungsbetrieb mit hoher Autonomie gegenüber einer übergeordneten Steuerungs- und/oder Regelungseinrichtung. Im zweiten Betriebsmodus arbeitet das Heizungssteuerungs- und/oder -regelungsgerät dagegen in großer Abhängigkeit von der übergeordneten Steuerungs- und/oder Regelungseinrichtung, die die wesentlichen Steuerungs- und/oder Regelungsaufgaben übernimmt.

Weiterhin kann das Heizungssteuerungs- und/oder -regelungsgerät einen Betriebsmodus für einen Betrieb mit einer übergeordneten Steuerungs- und/oder Regelungseinrichtung und einen Betriebsmodus für einen von der übergeordneten Steuerungs- und/oder Regelungseinrichtung autarken Betrieb ("standalone"- Betrieb) aufweisen. Dieser letztere Betriebsmodus kann zum einen für den Fall von Störungen in der übergeordneten Steuerungs- und/oder Regelungseinrichtung oder in dem Kommunikationssystem einen sicheren Betrieb aufrechterhalten bzw. einen Übergang in einen sicheren Betriebszustand herbeiführen. Dieser letztere Betriebsmodus kann aber auch für einen regulären Betrieb ohne eine übergeordnete Steuerungs- und/oder Regelungseinrichtung genutzt werden, wenn z.B. die Sollwerte manuell von einer Bedienperson vorgegeben werden.

Gemäß einer weiteren vorteilhaften Ausgestaltung weist das Heizungssteuerungs- und/oder -regelungsgerät ein Gehäuse mit einer Schutzart von IP 65 und mehr auf und kann dann direkt vor Ort im Feld bei den Heizelementen auch außerhalb eines Steuer- oder Schaltschrankes angeordnet werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: ein erstes Heizungssteuerungs- und/oder -regelungssystem mit einem erfindungsgemäßen Heizungssteuerungs- und/oder -regelungsgerät,
- FIG 2: ein Ausführungsbeispiel für einen Temperaturregler und
- FIG 3: ein zweites Heizungssteuerungs- und/oder -regelungssystem mit einem erfindungsgemäßen Heizungssteuerungs- und/oder -regelungsgerät.

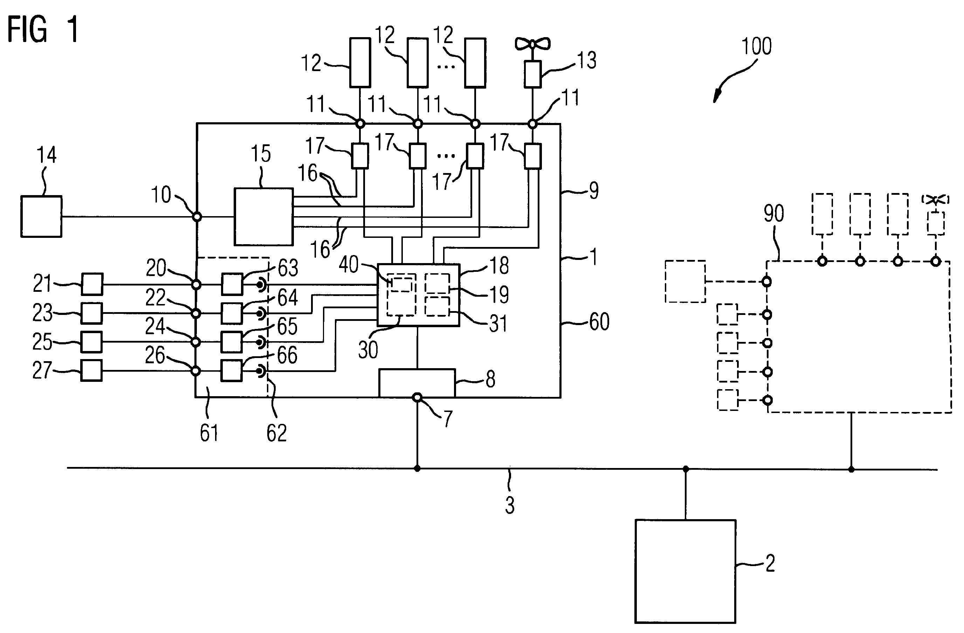

Ein in FIG 1 gezeigtes Heizungssteuerungs- und/oder -regelungssystem 100 umfasst ein Heizungssteuerungs- und/oder -regelungsgerät 1, eine übergeordnete Steuerungs- und/oder Regelungseinrichtung 2 und ein Kommunikationssystem 3.

Das Heizungssteuerungs- und/oder -regelungsgerät 1 weist einen Leistungseingang 10 und mehrere (z.B. neun) Leistungsausgänge 11 auf.

An die Leistungsausgänge 11 ist jeweils ein Heizelement 12, insbesondere jeweils ein Heizstrahler, oder alternativ ein Lüfterantrieb 13, elektrisch anschließbar.

Der Leistungseingang 10 ist elektrisch an ein Spannungsversorgungsnetz 14 (z.B. mit einer Nennspannung von 400 Vac) für die Heizelemente 12 bzw. den Lüfterantrieb 13 anschließbar.

Das Heizungssteuerungs- und/oder -regelungsgerät 1 weist weiterhin eine Stromverteilungseinrichtung 15 mit nicht näher dargestellten Leitungsschutzelementen auf, die eingangsseitig elektrisch mit dem Leistungseingang 10 und ausgangsseitig über jeweils einen Abzweig 16 elektrisch mit den Leistungsausgängen 11 verbunden ist, um diese mit elektrischem Strom aus dem Spannungsversorgungsnetz 14 zu versorgen. In jeden der Abzweige 16 ist jeweils ein Schaltelement 17 geschaltet. Als Schaltelement 17 kommt im Fall eines angeschlossenen Heizelements 12 vorzugsweise ein Halbleiterschalter (z.B. ein sogenanntes "Solid-State-Relay"), und im Fall eines angeschlossenen Lüfterantriebs 13 alternativ ein elektromechanisches Schütz zum Einsatz.

Das Heizungssteuerungs- und/oder -regelungsgerät 1 ist über eine Kommunikationsschnittstelle 7 an das Kommunikationssystem 3 angeschlossen und weist für die Kommunikation eine Kommunikationseinheit 8 auf. Bei dem Kommunikationssystem 3 handelt es sich vorzugsweise um einen offenen industriellen Feldbus wie z.B. PROFIBUS oder um ein offenes industrielles Netz wie z.B. PROFINET.

Weiterhin weist das Heizungssteuerungs- und/oder -regelungsgerät 1 eine Steuer- und/oder Regeleinheit 18 auf.

Die Steuer- und/oder Regeleinheit 18 ist derart eingerichtet, dass sie den Schaltzustand der Schaltelemente 17 in Abhängigkeit von Steuerbefehlen (z.B. Zuschaltbefehle, Abschaltbefehle) und von Sollwerten für die Heizleistung steuert und/oder regelt. Die Sollwerte können beispielsweise in Form von absoluten Sollwerten, von auf eine maximale Leistung bezogenen Sollwerten oder von auf eine Nennleistung bezogenen Sollwerten vorliegen. Die Leistung kann sich beispielsweise auf eine abzugebende Heizleistung oder eine aufzunehmende elektrische Leistung von Heizelementen beziehen. Aus diesen Sollwerten werden dann von der Steuer- und/oder Regeleinheit 18 mit Hilfe eines vorgegebenen Steuer- und/oder Regelungsalgorithmus 19 Ansteuersignale für die Schaltelemente 17 abgeleitet. Die Sollwerte können aber auch schon in Form von Pulspaketen oder Prozentwerten an Halbwellen pro Zeiteinheit (z.B. pro Sekunde) vorliegen, aus denen dann direkt Ansteuersignale für die Schaltelemente abgeleitet werden können. Über die Ansteuersignale werden dann die Schaltzustände der Schaltelemente 17 und damit die Heizleistungen der Heizelemente 12 gesteuert und/oder geregelt.

Die Ansteuerung der Schaltelemente 17 und somit die Steuerung oder Regelung des Schaltzustandes bzw. der Heizleistung kann beispielsweise mit einer Phasenanschnittsteuerung oder einer Halbwellensteuerung erfolgen.

Das Heizungssteuerungs- und/oder -regelungsgerät 1 empfängt hierzu über die Schnittstelle 7 Sollwerte und/oder Steuerbefehle von der übergeordneten Steuerungs- und/oder Regelungseinrichtung 2.

Vorzugsweise weist das Heizungssteuerungs- und/oder -regelungsgerät 1 ein Gehäuse 9 auf und die Stromverteilungseinrichtung 15, die Schaltelemente 17, die Steuer- und/oder Regeleinheit 18 und die Kommunikationseinheit 8 sind in das Gerät 1 integriert, d.h. von dem Gehäuse 9 umschlossen. Bei den Schaltelementen 17 kann es sich aber auch um gesonderte (d.h. nicht in das Gehäuse integrierte) Schaltelemente handeln, die extern zwischen einen Leistungsausgang 11 und ein Heizelement 12 oder einen Lüfterantrieb 13 geschaltet sind.

Das Heizungssteuerungs- und/oder -regelungsgerät 1 weist zumindest einen zusätzlichen Anschluss 20 für eine Temperaturmesseinrichtung 21 für Istwerte einer Temperatur auf und die Steuer- und/oder Regeleinheit 18 ist derart eingerichtet, dass sie die Istwerte der Temperatur von der Temperaturmesseinrichtung 21 erfasst und den Schaltzustand der Schaltelemente 17 zusätzlich in Abhängigkeit von diesen Istwerten der Temperatur steuert und/oder regelt.

Die Istwerte der Temperatur können von der Steuer- und/oder Regeleinheit 18 des Heizungssteuerungs- und/oder -regelungsgeräts 1 im Rahmen der Steuerung und/oder Regelung im einfachsten Fall dazu genutzt werden, Sicherheitsreaktionen auszulösen, d.h. zum Beispiel bei Überschreitung eines vorgegebene Grenzwertes eines, eine Gruppe oder alle der Heizelemente 12 von dem Spannungsversorgungsnetz 14 abzuschalten. Die Istwerte der Temperatur können auch von der Steuer- und/oder Regeleinheit 18 genutzt werden, um aus den von der übergeordneten Steuerungs- und/oder Regelungseinrichtung 2 erhaltenen Sollwerten neue Sollwerte abzuleiten. So kann die Steuer- und/oder Regeleinheit 18 beispielsweise von der übergeordneten Steuerungs- und/oder Regelungseinrichtung 2 erhaltene Sollwerte für eine Heizleistung der Heizelemente (z.B. in Form von Pulspaketen oder Prozentwerten an Halbwellen pro Zeiteinheit) nach vorgegebenen Kriterien in Abhängigkeit von den Istwerten der Temperatur abändern (z.B. zur Begrenzung von elektrischen Strömen beim Zuschalten der Heizelemente zur Spannungsversorgung, oder zur Betriebsoptimierung).

Gemäß einer besonders vorteilhaften Ausgestaltung sind die von dem Heizungssteuerungs- und/oder -regelungsgerät 1 über die Schnittstelle 7 von der übergeordneten Steuerungs- und/oder Regelungseinrichtung 2 empfangenen Sollwerte bereits Temperatursollwerte. In das Heizungssteuerungs- und/oder - regelungsgerät 1 ist dann eine vollständige Temperatursteuerung und/oder -regelung 30 integriert.

Die Erfassung und Verarbeitung der Istwerte der Temperatur, z.B. der Ist-Temperatur eines zu beheizenden Produktes, sowie deren Berücksichtigung bei der Steuerung und/oder Regelung der Schaltzustände der Schaltelemente 17 erfolgt somit lokal vor Ort in dem Heizungssteuerungs- und/oder -regelungsgerät 1. Es ist damit keine Kommunikation der Istwerte der Temperatur von dem Heizungssteuerungs- und/oder -regelungsgerät 1 an die übergeordneten Steuerungs- und/oder Regelungseinrichtung 2 und auch keine anschließende Kommunikation von geänderten Sollwerten und ggf. Steuerbefehlen für die Heizleistung der Heizelemente 12 von der übergeordneten Steuerungs- und/oder Regelungseinrichtung 2 an das Heizungssteuerungs- und/oder - regelungsgerät 1 notwendig. Hierdurch können Zeitverluste vermieden werden und es ist eine besonders schnelle Steuerung und/oder Regelung der Istwerte der Temperatur auf die Temperatursollwerte möglich. Es kann damit besonders schnell auf einen Heizprozess eingewirkt werden.

Aufgrund der weitgehenden Unabhängigkeit von der übergeordneten Steuerungs- und/oder Regelungseinrichtung 2, von etwaigen gesonderten Eingangsbaugruppen zur Erfassung der Istwerte der Temperatur und von dem Kommunikationssystem 3 können die Funktionen des Heizungssteuerungs- und/oder -regelungsgeräts 1 auch bei Störungen in der übergeordneten Steuerungs- und/oder Regelungseinrichtung 2 oder in dem Kommunikationssystem 3 aufrechterhalten werden. Es ist somit ein weitgehend autonomer Betrieb des Heizungssteuerungs- und/oder -regelungsgeräts 1 möglich. Hierdurch wird auch die Ausfallsicherheit des Heizprozesses erhöht.

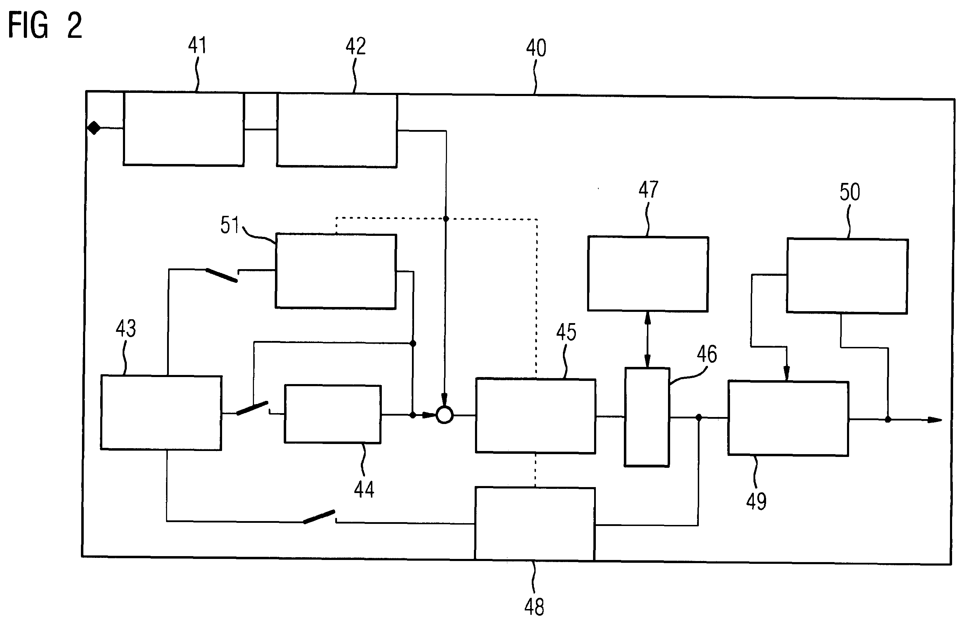

FIG 2 zeigt beispielhaft einen Temperaturregler 40 für eine Temperaturregelung in der Temperatursteuerung und/oder -regelung 30 der Steuer- und/oder Regeleinheit 18. Der Temperaturregler 40 weist eine Istwertbearbeitung 41 für eine Filterung der gemessenen und erfassten Istwerte der Temperatur und einen Baustein 42 für eine Prüfung der Plausibilität dieser Istwerte auf. Eine Sollwertbearbeitung 43 bestimmt den aktuell von der übergeordneten Steuerungs- und/oder Regelungseinrichtung 2 vorgegebenen Temperatursollwert und übergibt ihn an den eigentlichen Regler. Der Sollwert kann wahlweise über eine Zeitrampe geführt (Verschleifung 44) oder direkt vorgegeben werden.

Für die eigentliche Regelung weist der Regler 40 eine Regelzonenauswertung 45, eine PID-Regler 46, eine Regleradaption 47 zur Verbesserung des Stör- und Führungsverhaltens durch kontinuierliche Anpassung der Regelparameter und einen Baustein 48 zur Selbsteinstellung des Reglers auf. Eine Stellgrößenausgabe 49 dient zur Ausgabe von Stellgrößen, z.B. einen Sollwert für eine Heizleistung in Form von Pulspaketen (Puls-Pausenverhätnisse). Ein Baustein 50 dient während der Stellgrößenausgabe zur Überwachung, ob ein Stellsignal auch eine entsprechende Reaktion im Heizsystem hervorruft. Zur Regelung von Heißkanälen ist eine Anfahrschaltung 51 vorhanden.

Das Gerät 1 weist weiterhin noch einen zusätzlichen Anschluss 22 für einen Strom und/oder Spannungssensor 23 auf und die Steuer- und/oder Regeleinheit 18 ist derart ausgebildet, dass sie Strom- und/oder Spannungswerte von diesem Strom- und/oder Spannungssensor 23 erfasst und den Schaltzustand der Schaltelemente 17 zusätzlich in Abhängigkeit von diesen Strom- und/oder Spannungswerten steuert und/oder regelt. Bei den gemessenen Strömen oder Spannungen kann es sich beispielsweise um Ströme durch Heizelemente 12, Spannungen an Heizelementen 12, oder Spannungen/Ströme im Spannungsversorgungsnetz 14 handeln. Hierdurch können beispielsweise Schwankungen in der Spannungsversorgung oder Änderungen im elektrischen Widerstand der Heizelemente 12 (z.B. in deren Aufwärmphase) bei der Steuerung und/oder Regelung der Schaltzustände der Schaltelemente 17 berücksichtigt werden und somit die Genauigkeit der Steuerung und/oder Regelung erhöht werden.

Das Heizungssteuerungs- und/oder -regelungsgerät 1 weist auch noch zumindest einen zusätzlichen Anschluss 24 für einen analogen oder digitalen Signalgeber 25 auf und die Steuer- und/oder Regeleinheit 18 ist derart eingerichtet, dass sie analoge bzw. digitale Signale von diesem Signalgeber 25 erfasst und den Schaltzustand der Schaltelemente 17 zusätzlich in Abhängigkeit von diesen Signalen steuert und/oder regelt. Bei dem Signalgeber kann es sich beispielsweise um einen Taster, Schalter, Not-Aus-Signalgeber, eine Lichtschranke, ein Potentiometer, einen Geber von Statussignalen, einen Tachosignalgeber (d.h. Geber von Pulsgeschwindigkeiten) von Lüftern etc. handeln.

Das Heizungssteuerungs- und/oder -regelungsgerät 1 weist weiterhin zumindest einen zusätzlichen Anschluss 26 für eine Ausgabe analoger oder digitaler Signale auf und die Steuer- und/oder Regeleinheit 18 ist derart eingerichtet, dass sie diese analogen oder digitalen Signale in Abhängigkeit von über die zusätzlichen Anschlüsse 20, 22, 24 erfassten Werten, analogen oder digitalen Signalen und/oder den Sollwerten erzeugt.

Beispielhaft ist an den zusätzlichen Anschluss 26 ein Aktor 27 angeschlossen. Bei dem Aktor 27 kann es sich im einfachsten Fall um ein Meldegerät (z.B. Leuchtmelder, Warntongeber) oder aber auch um einen Antrieb (bzw. eine zugehörige Ansteuereinrichtung) für einen Lüfter, für eine Bewegung von Heizelementen 12 oder für das zu beheizende Produkt handeln. Anstatt eines Aktors könnte beispielsweise auch ein Sicherheitsüberwachungsgerät an den Anschluss 26 angeschlossen sein.

Für alle diese Werte und Signale erfolgt die Erfassung und Verarbeitung somit direkt lokal vor Ort in dem Heizungssteuerungs- und/oder -regelungsgerät 1 und ermöglicht somit ein schnelles Einwirken auf den Heizprozess bei hoher Autonomie des Geräts 1 und hoher Ausfallsicherheit einer Anlage.

Für eine besonders schnelle Verarbeitung weist die Steuer- und/oder Regeleinheit 18 eine Ablaufsteuerung 31 in Form einer Zustandsmaschine ("State-Machine") auf, die die über die zusätzlichen Anschlüsse 20, 22, 24 erfassten Werte und/oder analogen oder digitalen Signale und/oder die Sollwerte miteinander verknüpft und anhand einer hinterlegten Logik dann Reaktionen des Heizungssteuerungs- und/oder -regelungsgeräts 1 auslöst. Diese Reaktionen können Steuer- und/oder Regelungsfunktionen sowie Sicherheitsreaktionen des Heizungssteuerungs- und/oder -regelungsgeräts 1 betreffen. Beispielsweise können durch eine solche Reaktion über den Anschluss 26 ausgegebene analoge oder digitale Signale erzeugt oder geändert werden, oder es können die Ansteuersignale für die Schaltelemente 17 geändert werden.

Das Heizungssteuerungs- und/oder -regelungsgerät 1 besteht dabei aus einem Grundmodul 60 und einem Peripheriemodul 61, die über eine Schnittstelle 62 elektrisch und mechanisch miteinander verbindbar sind bzw. voneinander lösbar sind. Das Peripheriemodul 61 umfasst dabei die zusätzlichen Anschlüsse 20, 22, 24, 26 und zugehörige Einrichtungen 63, 64, 65, 66 zur Erfassung und Vorverarbeitung von eingangsseitigen Messwerten und Signalen bzw. zur Aufbereitung und Ausgabe von ausgangsseitigen Ansteuersignalen für den Aktor 27. Über das Peripheriemodul 61 kann eine einfache individuelle Anpassung des Heizungssteuerungs- und/oder -regelungsgeräts 1 an unterschiedliche Applikationen mit unterschiedlichen Eingangsgrößen und Ausgängen erfolgen, wohingegen das Grundmodul 60 für alle Applikationen gleich ist. Es können hierzu eine Anzahl unterschiedlicher standardisierter Peripheriemodule 61 für verschiedene Applikationen zur Verfügung gestellt werden, die sich beispielsweise in der Anzahl und Art der Eingänge, Empfindlichkeit der Eingänge, Signalpegel und -formen an den Ausgängen, Spannungsfestigkeit, Kurzschlussfestigkeit, etc. unterscheiden.

Zur Vereinfachung der Darstellung sind dabei in FIG 1 nur wenige zusätzliche Anschlüsse dargestellt. Grundsätzlich können natürlich anstatt nur jeweils eines einzigen Anschlusses für eine Temperaturmesseinrichtung, einen Strom- und/oder Spannungssensor, einen analogen oder digitalen Signalgeber und einen Aktor auch jeweils mehrere derartige Anschlüsse vorhanden sein und die Steuer- und/oder Regeleinheit 18 entsprechend zur Verarbeitung von Werten und Signalen aller dieser Eingänge bzw. zur Erzeugung von Ansteuersignalen für alle diese Ausgänge eingerichtet sein.

Das Heizungssteuerungs- und/oder -regelungsgerät 1 weist einen ersten Betriebsmodus für einen Betrieb des Grundmoduls 60 mit einem Peripheriemodul 61 und eine zweiten Betriebsmodus für einen Betrieb des Grundmoduls 60 ohne ein Peripheriemodul 61 auf. Im ersten Betriebsmodus arbeitet das Heizungssteuerungs- und/oder -regelungsgerät 1 dann im schnellen lokalen Steuerungs- und oder Regelungsbetrieb mit hoher Autonomie gegenüber der übergeordneten Steuerungs- und/oder Regelungseinrichtung 2. Im zweiten Betriebsmodus arbeitet das Heizungssteuerungs- und/oder -regelungsgerät 1 dagegen in großer Abhängigkeit von der übergeordneten Steuerungs- und/oder Regelungseinrichtung 2, die die wesentlichen Steuerungs- und/oder Regelungsaufgaben, z.B. eine Temperaturregelung, übernimmt.

Das Heizungssteuerungs- und/oder -regelungsgerät 1 weist außerdem einen Betriebsmodus für einen von der übergeordneten Steuerungs- und/oder Regelungseinrichtung 2 autonomen Betrieb ("stand-alone"- Betrieb) auf. Dieser Betriebsmodus kann zum einen für den Fall von Störungen in der übergeordneten Steuerungs- und/oder Regelungseinrichtung 2 oder in dem Kommunikationssystem 3 einen sicheren Betrieb aufrechterhalten bzw. einen Übergang in einen sicheren Betriebszustand herbeiführen. Dieser Betriebsmodus kann aber auch für einen regulären Betrieb ohne die übergeordnete Steuerungs- und/oder Regelungseinrichtung 2 genutzt werden, wenn z.B. die Sollwerte manuell von einer Bedienperson vorgegeben werden.

Das Heizungssteuerungs- und/oder -regelungsgerät 1 weist vorzugsweise ein Gehäuse 9 mit einer Schutzart von IP 65 und mehr auf und kann dann direkt vor Ort im Feld bei den Heizelementen 12 auch außerhalb eines Steuer- oder Schaltschrankes angeordnet werden.

Grundsätzlich kann das Heizungssteuerungs- und/oder -regelungsgerät 1 noch weitere Schnittstellen aufweisen, z.B. weitere Kommunikationsschnittstellen oder Spannungsversorgungsschnittstellen zur internen Spannungsversorgung des Geräts 1.

Die übergeordnete Steuerungs- und/oder Regelungseinrichtung 2 kann auch zur Steuerung und/oder Regelung weiterer Heizungssteuerungs- und/oder -regelungsgeräte 1 dienen, die an das Kommunikationssystem 3 angeschlossen sind. Dies ist in FIG 1 durch eine weiteres Heizungssteuerungs- und/oder -regelungsgerät mit dem Bezugszeichen 90 angedeutet.

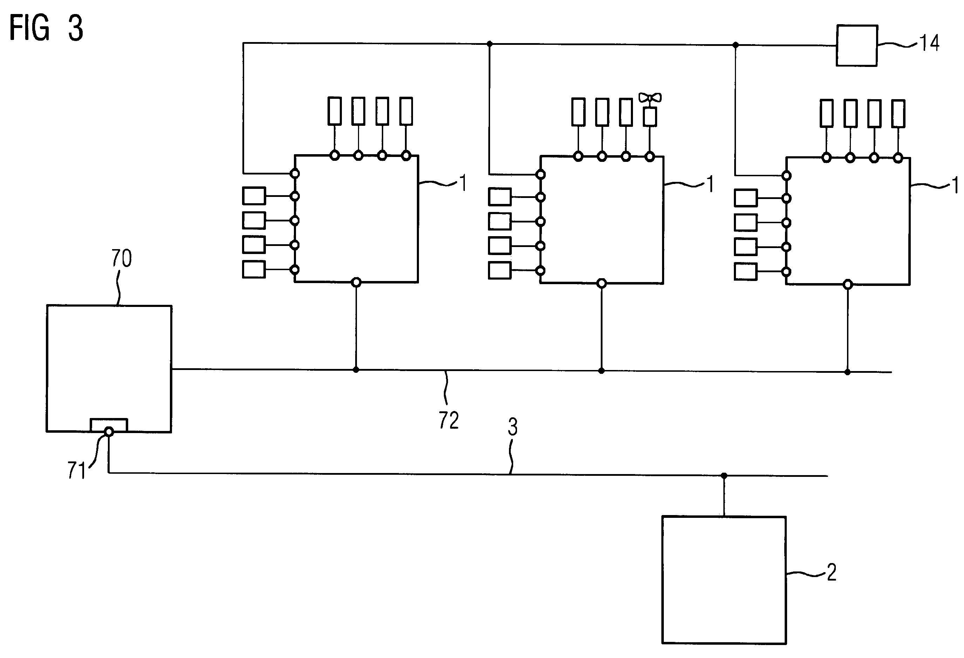

Wie in FIG 3 gezeigt, können auch mehrere Heizungssteuerungs- und/oder -regelungsgeräte 1 zusammen mit einem Schnittstellenmodul 70 zu einem modularen Heizungssteuerungs- und/oder - regelungssystem zusammengefasst sein. Die Geräte 1 können dann an ein gemeinsames Spannungsversorgungsnetz 14 angeschlossen sein. Das Schnittstellenmodul 70 dient als zentrale Schnittstelle der Geräte 1 mit dem Kommunikationssystem 3 und damit zur Kommunikation mit der übergeordneten Steuerungs- und/oder Regelungseinrichtung 2. Das Schnittstellenmodul 70 weist hierzu eine Kommunikationsschnittstelle 71 zum Kommunikationssystem 3 auf. Die einzelnen Heizungssteuerungs- und/oder -regelungsgeräte 1 stellen dann Leistungsmodule bzw. Leistungseinheiten des Systems dar. Die Heizungssteuerungs- und/oder -regelungsgeräte 1 sind mit ihrer Kommunikationsschnittstelle 7 an ein internes (z.B. proprietäres) Kommunikationssystem 72 angeschlossen und darüber mit dem Schnittstellenmodul 70 in Kommunikation. Das Schnittstellenmodul 70 empfängt Sollwerte und/oder Steuerbefehle von der übergeordneten Steuerungs- und/oder Regelungseinrichtung 2 und leitet diese an die Geräte 1 weiter.

Es ist auch denkbar, dass das Schnittstellenmodul 70 ähnliche zusätzliche Anschlüsse und Verarbeitungsmöglichkeiten wie die Geräte 1 bzw. die Peripheriemodule 61 hat, wodurch in Abhängigkeit von den erfassten Werten und Signalen bereits schon eine Beeinflussung/Änderung der Sollwerte oder Steuerbefehle im Schnittstellenmodul 70 erfolgen kann.

## Patentansprüche

1. Heizungssteuerungs- und/oder -regelungsgerät (1) mit
- mehreren Leistungsausgängen (11), an die jeweils ein Heizelement (12), insbesondere jeweils ein Heizstrahler, elektrisch anschließbar ist,
- einem Leistungseingang (10), der elektrisch an eine Spannungsversorgung (14) für die Heizelemente (12) anschließbar ist,
- einer Stromverteilungseinrichtung (15), die eingangsseitig elektrisch mit dem Leistungseingang (10) und ausgangsseitig über jeweils einen Abzweig (16) elektrisch mit den Leistungsausgängen (12) verbunden ist, um diese mit elektrischem Strom aus der Spannungsversorgung (14) zu versorgen,
- jeweils einem Schaltelement (17) entweder in jedem der Abzweige (16) oder zwischen den Leistungsausgängen (11) und den Heizelementen (12),
- einer Steuer- und/oder Regeleinheit (18), die derart eingerichtet ist, dass sie den Schaltzustand der Schaltelemente (17) in Abhängigkeit von Sollwerten steuert und/oder regelt,
- einer Schnittstelle (7) zum Empfang der Sollwerte, **dadurch gekennzeichnet, dass** es
- zumindest einen zusätzlichen Anschluss (20) für eine Temperaturmesseinrichtung (21) für Istwerte einer Temperatur aufweist,
und dass
- die Steuer- und/oder Regeleinheit (18) derart eingerichtet ist, dass sie die Istwerte der Temperatur von der Temperaturmesseinrichtung (21) erfasst und den Schaltzustand der Schaltelemente (17) zusätzlich in Abhängigkeit von diesen Istwerten der Temperatur steuert und/oder regelt.

2. Heizungssteuerungs- und/oder -regelungsgerät (1) nach Anspruch 1, **dadurch gekennzeichnet, dass** die Sollwerte Temperatursollwerte sind.

3. Heizungssteuerungs- und/oder -regelungsgerät (1) nach Anspruch 1 oder 2, **dadurch gekennzeichnet, dass** es zumindest einen zusätzlichen Anschluss (22) für einen Strom und/oder-Spannungssensor (23) aufweist, und dass die Steuer- und/oder Regeleinheit (18) derart eingerichtet ist, dass sie Strom- und/oder Spannungswerte von diesem Strom- und/oder Spannungssensor (23) erfasst und den Schaltzustand der Schaltelemente (17) zusätzlich in Abhängigkeit von diesen Strom- und/oder Spannungswerten steuert und/oder regelt.

4. Heizungssteuerungs- und/oder -regelungsgerät (1) nach einem der vorhergehenden Ansprüche, **dadurch gekennzeichnet, dass** es zumindest einen zusätzlichen Anschluss (24) für einen digitalen oder analogen Signalgeber (25) aufweist und dass die Steuer- und/oder Regeleinheit (18) derart eingerichtet ist, dass sie analoge oder digitale Signale von diesem Signalgeber (25) erfasst und den Schaltzustand der Schaltelemente (17) zusätzlich in Abhängigkeit von diesen Signalen steuert und/oder regelt.

5. Heizungssteuerungs- und/oder -regelungsgerät (1) nach einem der vorhergehenden Ansprüche, **dadurch gekennzeichnet, dass** es zumindest einen zusätzlichen Anschluss (26) für eine Ausgabe analoger oder digitaler Signale aufweist und dass die Steuer- und/oder Regeleinheit (18) derart eingerichtet ist, dass sie diese analogen oder digitalen Signale in Abhängigkeit von über die zusätzlichen Anschlüsse (20, 22, 24) erfassten Werten, analogen oder digitalen Signalen und/oder den Sollwerten erzeugt.

6. Heizungssteuerungs- und/oder -regelungsgerät (1) nach einem der Ansprüche 3 bis 5, **dadurch gekennzeichnet, dass** es eine Ablaufsteuerung (31) aufweist, die die über die zusätzlichen Anschlüsse erfassten Werte und/oder analogen oder digitalen Signale und/oder die Sollwerte miteinander verknüpft und anhand einer hinterlegten Logik Reaktionen des Heizungssteuerungs- und/oder -regelungsgerät auslöst.

7. Heizungssteuerungs- und/oder -regelungsgerät (1) nach einem der vorhergehenden Ansprüche, **dadurch gekennzeichnet, dass** die Schnittstelle (7) zum Anschluss an ein Kommunikationssystem (3), insbesondere an einen offenen industriellen Feldbus oder ein offenes industrielles Netz, ausgebildet ist.

8. Heizungssteuerungs- und/oder -regelungsgerät (1) nach einem der vorhergehenden Ansprüche, **dadurch gekennzeichnet, dass** es zumindest ein Grundmodul (60) und ein Peripheriemodul (61) umfasst, die über eine Schnittstelle (62) elektrisch und mechanisch miteinander verbindbar sind bzw. voneinander lösbar sind, wobei das Peripheriemodul (61) die zusätzlichen Anschlüsse (20, 22, 24, 26), vorzugsweise auch zugehörige Einrichtungen (63, 64, 65) zur Erfassung und Vorverarbeitung von Messwerten, umfasst.

9. Heizungssteuerungs- und/oder -regelungsgerät (1) nach Anspruch 8, **dadurch gekennzeichnet, dass** es einen ersten Betriebsmodus für einen Betrieb des Grundmoduls (60) mit dem Peripheriemodul (61) und einen zweiten Betriebsmodus für einen Betrieb des Grundmoduls (60) ohne das Peripheriemodul (61) aufweist.

10. Heizungssteuerungs- und/oder -regelungsgerät (1) nach einem der vorhergehenden Ansprüche, **dadurch gekennzeichnet, dass** es einen Betriebsmodus für einen Betrieb mit einer übergeordneten Steuerungs- und/oder Regelungseinrichtung (2) und einen Betriebsmodus für einen von der übergeordneten Steuerungs- und/oder Regelungseinrichtung (2) autarken Betrieb aufweist.

11. Heizungssteuerungs- und/oder -regelungsgerät (1) nach einem der vorhergehenden Ansprüche, **dadurch gekennzeichnet, dass** es ein Gehäuse mit einer Schutzart von IP 65 und mehr aufweist.

## Claims

1. Heating control and/or regulation device (1) with
- a number of power outputs (11), to each of which a heating element (12), especially a radiant heater, is able to be connected electrically,
- a power input (10), which is able to be connected electrically to a power supply (14) for the heating elements (12),
- a power distribution device (15), which is connected electrically on the input side to the power input (10) and is connected electrically on the output side via a branch (16) in each case to the power outputs (12), in order to supply these with electric power from the power supply (14),
- a respective switching element (17) either in each of the branches (16) or between the power outputs (11) and the heating elements (12),
- a control and/or regulation unit (18), which is configured such that it controls and/or regulates the switching state of the switching elements (17) as a function of required values,
- an interface (7) for receiving the required values, **characterised in that**
- it has at least one additional connection (20) for a temperature measurement device (21) for actual values of a temperature,
and that
- the control and/or regulation unit (18) is configured such that it acquires the actual values of the temperature from the temperature measurement device (21) and additionally controls and/or regulates the switching state of the switching elements (17) as a function of these actual values of the temperature.

2. Heating control and/or regulation device (1) according to claim 1, **characterised in that** the required values are required temperature values.

3. Heating control and/or regulation device (1) according to claim 1 or 2, **characterised in that** it has at least one additional connection (22) for a current and/or voltage sensor (23) and that the heating control and/or regulation unit (18) is configured such that it acquires current and/or voltage values from this current and/or voltage sensor (23) and controls and/or regulates the switching state of the switching elements (17) additionally as a function of these current and/or voltage values.

4. Heating control and/or regulation device (1) according to one of the preceding claims, **characterised in that** it has at least one additional connection (24) for a digital or analogue signal generator (25) and that the control and/or regulation unit (18) is configured so that it acquires the analogue and digital signals from the signal generator (25) and additionally controls and/or regulates the switching state of the switching elements (17) as a function of these signals.

5. Heating control and/or regulation device (1) according to one of the preceding claims, **characterised in that** it has at least one additional connection (26) for an output of analogue or digital signals and that the control and/or regulation unit (18) is configured such that it creates these analogue or digital signals as a function of values acquired via the additional connections (20, 22, 24), analogue or digital signals and/or the required values.

6. Heating control and/or regulation device (1) according to one of claims 3 to 5, **characterised in that** it has a scheduler (31) which logically links the values acquired via the additional connections and/or analogue or digital signals and/or the required values to one another and triggers reactions of the heating control and/or regulation device on the basis of a stored logic.

7. Heating control and/or regulation device (1) according to one of the preceding claims, **characterised in that** the interface (7) is embodied for connection to a communications system (3), especially to an open industrial field bus or an open industrial network.

8. Heating control and/or regulation device (1) according to one of the preceding claims, **characterised in that** it comprises at least one basic module (60) and a peripheral module (61) which are able to be connected to one another or disconnected from one another electrically and mechanically via an interface (62), wherein the peripheral module (61) includes the additional connections (20, 22, 24, 26), preferably also corresponding devices (63, 64, 65) for acquisition and preprocessing of measured values.

9. Heating control and/or regulation device (1) according to claim 8, **characterised in that** it has a first operating mode for operating the basic module (60) with the peripheral module (61) and a second operating mode for operating the basic module (60) without the peripheral module (61).

10. Heating control and/or regulation device (1) according to one of the preceding claims, **characterised in that** it has an operating mode for operation with a higher-ranking control and/or regulation device (2) and an operating mode for operation independent of the higher-ranking control and/or regulation device (2).

11. Heating control and/or regulation device (1) according to one of the preceding claims, **characterised in that** it has a housing with a protection type of IP 65 and greater.

## Revendications

1. Appareil (1) de commande et/ou de régulation de chauffage comprenant
- plusieurs sorties (11) de puissance, auxquelles peut être connecté électriquement un élément (12) de chauffage, notamment un radiateur de chauffage,
- une entrée (10) de puissance, qui peut être connectée électriquement à une alimentation (14) en tension des éléments (12) de chauffage,
- un dispositif (15) de répartition du courant, qui est relié du côté de l'entrée électriquement avec l'entrée (10) de puissance et du côté de la sortie par respectivement une dérivation (16) électriquement avec les sorties (12) de puissance pour les alimenter en du courant électrique de l'alimentation (14) en tension,
- respectivement un élément (17) de commutation soit dans chacune des dérivations (16), soit entre les sorties (11) de puissance et les éléments (12) de chauffage,
- une unité (18) de commande et/ou de régulation, qui est conçue pour commander et/ou réguler l'état de commutation des éléments (17) de commutation en fonction de valeurs de consigne,
- une interface (7) de réception des valeurs de consigne, **caractérisé en ce qu'**il a
- au moins une borne (20) supplémentaire pour un dispositif (21) de mesure de valeurs réelles d'une température, et **en ce que**
- l'unité (18) de commande et/ou de régulation est conçue de manière à relever les valeurs réelles de la température par le dispositif (21) de mesure de la température et pour commander et/ou réguler l'état de commutation des éléments (17) de commutation supplémentairement en fonction de ces valeurs réelles de la température.

2. Appareil (1) de commande et/ou de régulation du chauffage suivant la revendication 1, **caractérisé en ce que** les valeurs de consigne sont des valeurs de consigne de température.

3. Appareil (1) de commande et/ou de régulation du chauffage suivant l'une des revendications 1 ou 2, **caractérisé en ce qu'**il a au moins une borne (22) supplémentaire pour un capteur (23) de courant et/ou de tension et **en ce que** l'unité (18) de commande et/ou de régulation est conçue de manière à détecter des valeurs de courant et/ou de tension de ce capteur (23) de courant et/ou de tension et à commander et/ou à réguler l'état de commutation des éléments (17) de commutation supplémentairement, en fonction de ces valeurs de courant et/ou de tension.

4. Appareil (1) de commande et/ou de régulation du chauffage suivant l'une des revendications précédentes, **caractérisé en ce qu'**il a au moins une borne (24) supplémentaire pour un indicateur (25) de signal numérique ou analogique et **en ce que** l'unité (18) de commande et/ou de régulation est conçue pour détecter des signaux analogiques ou numériques de cet indicateur (25) de signaux et pour commander et/réguler l'état de commutation des éléments (17) de commutation supplémentairement en fonction de ces signaux.

5. Appareil (1) de commande et/ou de régulation du chauffage suivant l'une des revendications précédentes, **caractérisé en ce qu'**il a au moins une borne (26) supplémentaire pour l'émission de signaux analogiques ou numériques et **en ce que** l'unité (18) de commande et/ou de régulation est conçue de manière à produire ces signaux analogiques ou numériques en fonction de valeurs détectées par les bornes 20, 22, 24) supplémentaires de signaux analogiques ou numériques et/ou des valeurs de consigne.

6. Appareil (1) de commande et/ou de régulation du chauffage suivant l'une des revendications 3 à 5, **caractérisé en ce qu'**il a une commande (31) de déroulement, qui combine entre elles les valeurs détectées par les bornes supplémentaires et/ou des signaux analogiques ou numériques et/ou les valeurs de consigne et qui, à l'aide d'une logique mémorisée, déclenche des réactions de l'appareil de commande et/ou de régulation du chauffage.

7. Appareil (1) de commande et/ou de régulation du chauffage suivant l'une des revendications précédentes, **caractérisé en ce que** l'interface (7) est constituée pour la connexion à un système (3) de communication, notamment à un bus de terrain industriel ouvert ou à un réseau industriel ouvert.

8. Appareil (1) de commande et/ou de régulation du chauffage suivant l'une des revendications précédentes, **caractérisé en ce qu'**il comprend au moins un module (60) de base et un module (61) périphérique, qui peuvent être reliés l'un à l'autre électriquement et mécaniquement par une interface (62) ou qui peuvent être dissociés l'un de l'autre, le module (61) périphérique comprenant les bornes (20, 22, 24, 26) supplémentaires, de préférence aussi des dispositifs (63, 64, 65) associés de détection et de prétraitement de valeurs de mesure.

9. Appareil (1) de commande et/ou de régulation du chauffage suivant l'une la revendication 8, **caractérisé en ce qu'**il a un premier mode de fonctionnement pour un fonctionnement du module (60) de base avec le module (61) périphérique et un deuxième mode de fonctionnement pour un fonctionnement du module (60) de base sans le module (61) périphérique.

10. Appareil (1) de commande et/ou de régulation du chauffage suivant l'une des revendications précédentes, **caractérisé en ce qu'**il a un mode de fonctionnement pour un fonctionnement avec un dispositif (2) de commande et/ou de régulation supérieur hiérarchiquement et un mode de fonctionnement pour un fonctionnement indépendant du dispositif (2) de commande et/ou de régulation supérieur hiérarchiquement.

11. Appareil (1) de commande et/ou de régulation du chauffage suivant l'une des revendications précédentes, **caractérisé en ce qu'**il a une enveloppe d'un type de protection de IP 65 et plus.
